# EUROPEAN PATENT APPLICATION

(11) **EP 0 651 586 A2**
(43) Date of publication of application: **03.05.1995**
(21) Application number: 94113281.3
(22) Date of filing: 25.08.1994
(51) Int. Cl.: H04Q 7/22

(54) **Procedure for performing operations of supervision, maintenance and control in fixed cellular networks and means for carrying this out**

(30) Priority: 29.10.1993 ES 9302273
(71) Applicant: ALCATEL STANDARD ELECTRICA, S.A., E-28045 Madrid (ES)
(72) Inventor: Garcia Aguilera, José Maria, E-28035 Madrid (ES)
(74) Representative: Pohl, Herbert, Dipl.-Ing

(57) **Abstract**

Of special application in cellular networks based on the GSM standard for carrying out the supervision, maintenance and control of fixed cellular terminals.

This procedure is applied to a cellular network based on a fixed part (MSC, BSC, BS, OMC, SC) and a mobile part which comprises cellular terminals (TCF, TCM) that communicate with the preceding fixed part of the network and in which this cellular network has a short message service channel for transmitting information between terminals of the mobile part and a service centre (SC).

The aforementioned GSM short message service channel is used to transmit messages for supervision, maintenance and control between the fixed cellular terminals (TCF) and the maintenance and control centre (OMC).

## Description

### OBJECT OF THE INVENTION

This invention refers to a procedure and the means for performing the functions of supervision, maintenance and control, in a remote manner, of fixed cellular terminals used in cellular networks based on the GSM standard.

Likewise, it is also the object of this invention to perform the aforementioned functions for public terminals connected to these fixed cellular terminals.

### BACKGROUND TO THE INVENTION

The need to perform functions of supervision, maintenance and control in communications networks is a requirement, on the operators' part, in the section of the infrastructure of the network that is their responsibility, for guaranteeing the correct operation of the services they offer, as well as for rapidly repairing any anomaly that might arise. To this end, there are various more or less adequate alternatives, depending on the type of network and its configuration.

Recently a multitude of new services and configurations are being proposed for networks defined and standardised in the course of the last few years, such as, for example, GSM.

This GSM network also provides a series of teleservices (short messages, facsimile, etc.), data transmission and suplementary services (message forwarding and call restriction). Thus, for example, the short message teleservice permits the sending of individualised messages of limited size for and from the mobile terminals, in point to point mode, as is indicated in the recommendation of the GSM 03.40, version 3.5.0 of February 1992 under the title "Technical realization of the short message service point-to-point". This service makes use of a service centre that acts as a short message store and forward centre.

Based on standards of this kind, the network operators can cover determined types of basic service which, in another way, would be more expensive or difficult to offer. For example, this is the case of the so-called "fixed cellular network" based on GSM type cellular networks, in which one of the mobile terminals is located in a fixed position and also is deprived of the mobility functions in order to reduce complexity. To this terminal, now commonly termed "fixed cellular terminal", through corresponding line interfaces specially designed for the purpose, are connected telephone terminals or similar equipments in the same manner as a fixed service subscriber line.

In this type of infrastructure, as already stated, it is usually the operator's responsibility to carry out the network maintenance that includes the fixed cellular terminal which, for obvious reasons, is situated near to the subscriber or group of subscribers and distant from the fixed part of the cellular network infrastructure.

Due to the newness of this type of fixed cellular architecture, there are no procedures established for carrying out the mentioned functions of supervision, maintenance and control of these fixed cellular terminals. Nevertheless, there are several methods for performing functions of this type which, although applied in other types of network, could also be employed in those of the fixed cellular type.

One of these methods that is widely known consists in storing the events that occur as the result of a test procedure performed cyclically in the remote part and afterwards transmitting these events over one of the telephone channels to a control centre during the off-peak times.

There is also an alternative solution of using the user's signalling channel although, clearly, in order to be able to apply this solution it is necessary for the system to employ a signalling channel, which is not always the case. Finally there is also the possibility of using one of the communications channels exclusively for operation and maintenance functions, although this cannot be contemplated for low capacity terminals as in the case now under consideration.

### TECHNICAL PROBLEM TO BE OVERCOME

Considering the state of the art, the technical problem is to inform the operation and maintenance centre, in real time and effectively, of the incidents and test results occurring in fixed cellular terminals based in GSM networks, as well as sending and receiving commands for supervision, maintenance and/or control processes, without impairment to the service available to the corresponding subscribers.

### CHARACTERISATION OF THE INVENTION

This invention offers a procedure for performimg operations of supervision, maintenance and control in fixed cellular networks of the GSM type based on a fixed part and a mobile part which comprise fixed and/or mobile cellular terminals that communicate with the fixed part mentioned and in which these cellular networks have a channel for a short message service, SMS, for transmitting general information between the service centre and the mobile part terminals. The invention is characterised in that this short message service channel is used to send supervision, maintenance and control messages between each of the fixed cellular terminals and the maintenance and control centre included in the fixed part of the network.

The invention is also characterised in that, for effecting the transmission of the messages of supervision, maintenance and control betweeen the fixed cellular terminals and the maintenance and control centre, the following steps are taken:
- generation of supervision, maintenance and control messages by the operation and maintenance centre,
- transmission of these messages by the base stations, using the short message service channel to do this,
- reception of these supervision, maintenance and control messages over the short message service channel by the fixed cellular terminals,
- transmission, by the fixed cellular terminals, of supervision, maintenance and control response messages, over the short message service channel, and
- reception of these supervision, maintenance and control response messages on the short message service channel by the base stations.

To implement the procedure described, the invention is also characterised in that the base stations have means for transmitting the supervision, maintenance and control messages generated by the operation and maintenance centre by radio over the short message service channel, and means for receiving, also over the short message service channel, the supervision, maintenance and control response commands coming from the fixed cellular terminals.

In similar fashion, the fixed cellular terminals include means for receiving the supervision, maintenance and control messages generated by the operation and maintenance centre and transmitted by radio over the short message service channel, and means for transmitting, also by radio, the supervision, maintenance and control response messages towards the operation and maintenance centre.

As a result of the application of the invention in networks like those described, basic functions like supervision, control and maintenance of fixed cellular terminals can be performed remotely, without detracting from system channel availability and with very little delay from the time an event occurs in a fixed cellular terminal until it is reported to the responsible centre, or else from the time this centre sends a command to the terminal until it is executed.

### BRIEF FOOTNOTES TO THE FIGURES

A fuller explanation of the invention is given based on the following figures in which:

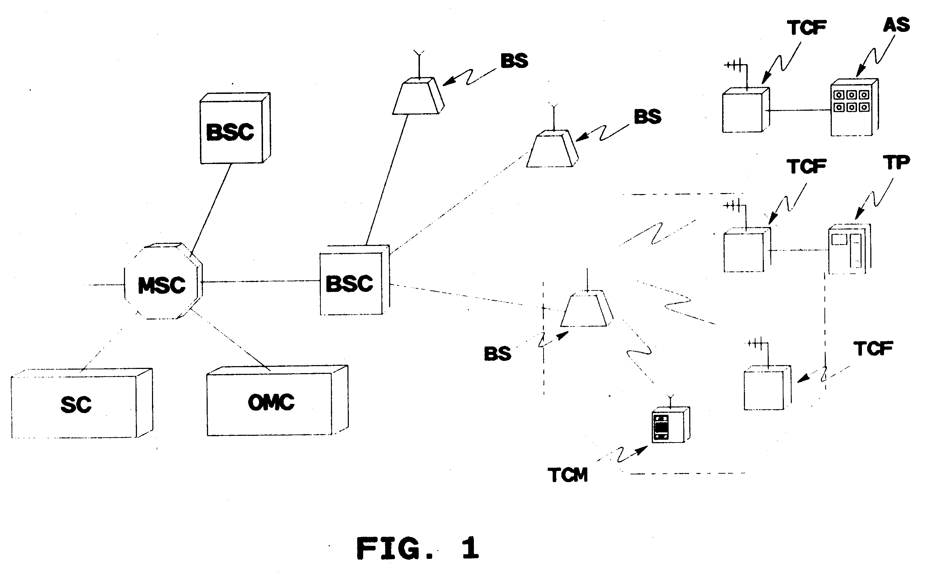

- figure 1 shows the part of the infrastructure of a cellular network that includes fixed cellular terminals according to the object of the invention,

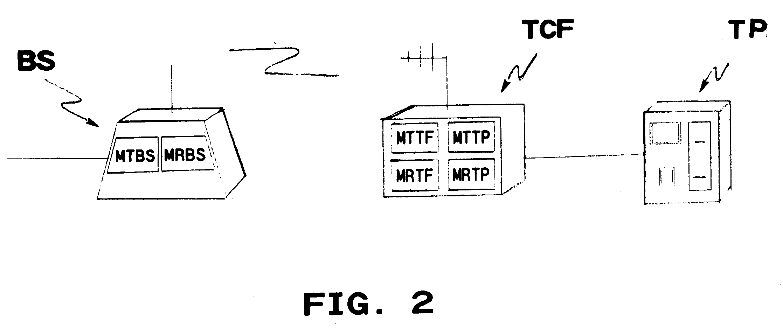

- figure 2 shows the functional blocks included both in the base station and in the fixed cellular terminal.

### DESCRIPTION OF A RECOMMENDED IMPLEMENTATION

The infrastructure of a fixed cellular network in which the invention is applied consists, on one hand, of the fixed part of the network which has a service centre SC that stores and sends information messages from and to the mobile cellular terminals TCM and directed to a "human interface" and an operation and maintenance centre OMC which centralises all the maintenance and control operations of the fixed part of the cellular network in a determined area covered by a certain number of cells. The base stations BS located in these cells are connected, through the corresponding base station controllers BSC, to a mobile switching centre MSC responsible for the zone and which also communicates with the aforementioned operation and maintenance centre OMC and service centre SC, as well as other elements.

In these cells, there can be a variable number of mobile cellular terminals TCM, but also a determined number of fixed cellular terminals TCF to which, via the corresponding interface, are connected subscriber terminals like, for example, basic service telephone terminals.

In this way, the subscriber can benefit from the telephone service which, under other circumstances, the operators could not offer immediately or at a cost less than that of an infrastructure based on non-cellular networks. In these types of network, the supervision, maintenance and control of the fixed cellular terminals has to be the responsibility of the operator.

The GSM system, as is already known, is provided with a short message service known as SMS that is transmitted over associated low capacity channels and not in channels carrying traffic, the content of these messages being general information (traffic statistics, weather information, etc.) or personalised messages. This service is bidirectional, that is, both towards the mobile cellular terminals TCM and originating in these and transmitted in the corresponding time slots reserved for this service. This additional service, as defined for GSM, has no application in fixed cellular terminals TCF.

In such cases, the network is designed so that a new group of restricted broadcast messages is defined, directed to each of the users individually by means of the appropriate identification.

These messages are generated in the operation and maintenance centre OMC which serves to coordinate the functions of supervision, maintenance and control of the previously mentioned fixed cellular terminals TCF on an individual basis. To achieve this, by means of a terminal identifier word, which is unique for each of the terminals, the operation and maintenance centre OMC sends a supervision, maintenance and/or control message SMC over the network to the fixed cellular terminals TCF. The base stations BS transmit this message by radio and via the corresponding means MTBS over the short message service channel SMS to the terminals where, once received, they are interpreted, not as information for the user, but as the type intended for the operation and maintenance centre OMC. As a consequence of sending these messages coming from the operation and maintenance centre OMC, the fixed cellular terminal TCF, which includes means MRTF for receiving supervision, maintenance and control messages SMC, interprets these and, depending on the type of command, actuates accordingly and/or sends supervision, maintenance and control response messages RSMC, through the corresponding means MTTF, which, once received in the base station BS by the corresponding means MRBS for receiving supervision, maintenance and control response messages, are forwarded over the fixed part of the network to the operation and maintenance centre OMC.

In this implementation, there is also, in the fixed part, what is termed the service centre SC which, in similar manner to the operation and maintenance centre OMC, serves to centralise and coordinate the functions orientated at cellular terminal services (both fixed and mobile) and which for the case of fixed cellular terminals TCF also makes use of the short message service channel SMS for the interchange of commands.

Also shown is the situation where a public terminal TP is connected to a fixed cellular terminal TCF. In this case, the fixed cellular terminal TCF, making use of forwarding means MTTP, can also retransmit to the public terminal TP supervision, maintenance and/or control commands SMC coming from the operation and maintenance centre OMC or service centre SC, or directed to these, making use of means MRTP for forwarding the supervision, maintenance and control response messages RSMC generated in the public terminal TP. The centre with which communication is established depends on the kind of functions required, which can be those of terminal supervision, terminal validation or disabling, terminal and service centre SC and/or operation and maintenance centre OMC authentication, charging, credit card or phone card authentication, etc.

Finally, there is an alarm system AS connected to another fixed cellular terminal TCF operating in like manner to the previously mentioned public terminal TP and which also communicates with the fixed part of the network making use of the short message service channel SMS for sending the alarm signals to the service centre SC, enabling/inhibiting the alarms remotely, authentication of both the actual alarm system AS and the fixed cellular terminal TCF or the service centre SC, checking correct alarm operation, etc.

## Claims

1. **PROCEDURE FOR PERFORMING OPERATIONS OF SUPERVISION, MAINTENANCE AND CONTROL IN FIXED CELLULAR NETWORKS** based on a fixed part (MSC, BSC, BS, OMC, SC) and a mobile part that comprises cellular terminals (TCF, TCM) that communicate, by radio, with the fixed part previously mentioned (MSC, BSC, BS, OMC, SC) and in which these cellular networks have a short message service channel (SMS) for transmitting general information between the service centre and the terminals of the mobile part, **characterised** in that this short message service channel (SMS) is used to transmit supervision, maintenance and control messages (SMC) between the fixed part of the network and each of the fixed cellular terminals (TCF).

2. **PROCEDURE** according to claim 1 **characterised** in that it comprises the stages of:
- generation of supervision, maintenance and control messages (SMC) by the operation and maintenance centre (OMC),
- transmission of these messages by the base stations (BS), using for this the short message service channel (SMS),
- reception of these supervision, maintenance and control messages (SMC) by the fixed cellular terminals (TCF),
- transmission of supervision, maintenance and control response messages (RSMC) by the fixed cellular terminals (TCF) over the short message service channel (SMS), and
- reception, by the base stations (BS), of the aforementioned supervision, maintenance and control response messages (RSMC) over the short message service channel (SMS).

3. **SYSTEM FOR PERFORMING OPERATIONS OF SUPERVISION, MAINTENANCE AND CONTROL IN FIXED CELLULAR NETWORKS** based on a fixed part (MSC, BSC, BS, OMC, SC) and a mobile part that comprises cellular terminals (TCF, TCM) that communicate, by radio, with the fixed part previously mentioned (MSC, BSC, BS, OMC, SC) and in which these cellular networks have a short message service channel (SMS) for transmitting general information between the service centre and the terminals of the mobile part, **characterised** in that the base stations (BS) comprise:
- means (MTBS) for transmitting supervision, maintenance and control messages (SMC) to the cellular terminals (TCF, TCM) using for this the short message service channel (SMS), and
- means (MRBS) for receiving supervision, maintenance and control response messages (RSMC) coming from the fixed cellular terminals (TCF) over the short message service channel (SMS).

4. **SYSTEM FOR PERFORMING OPERATIONS OF SUPERVISION, MAINTENANCE AND CONTROL IN FIXED CELLULAR NETWORKS** based on a fixed part (MSC, BSC, BS, OMC, SC) and a mobile part that comprises cellular terminals (TCF, TCM) that communicate, by radio, with the fixed part previously mentioned (MSC, BSC, BS, OMC, SC) and in which these cellular networks have a short message service channel (SMS) for transmitting general information between the service centre and the terminals of the mobile part, **characterised** in that the fixed cellular terminals comprise:
- means (MTTF) for transmitting supervision, maintenance and control response messages (RSMC) towards the operation and maintenance centre (OMC) using for this the short message service channel (SMS), and
- means (MRTF) for receiving supervision, maintenance and control messages (SMC) coming from the operation and maintenance centre (OMC) over the short message service channel (SMS).

5. **SYSTEM FOR PERFORMING OPERATIONS OF SUPERVISION, MAINTENANCE AND CONTROL IN FIXED CELLULAR NETWORKS** according to claim 4, **characterised** in that the fixed cellular terminals (TCF) also comprise:
- means (MTTP) for forwarding the supervision, maintenance and control messages (SMC) generated in a service centre (SC) to a public terminal (TP) connected to its corresponding fixed cellular terminal (TCF) in order to perform in the latter, among other things, functions of validation as well as of charging and/or authentication of payment cards used in the public terminal,
- means (MRTP) for forwarding the supervision, maintenance and control response messages (RMSC) generated by the public terminal (TP) mentioned to the service centre (SC) or to the operation and maintenance centre (OMC).

6. **SYSTEM FOR PERFORMING OPERATIONS OF SUPERVISION, MAINTENANCE AND CONTROL IN FIXED CELLULAR NETWORKS** according to claim 5, characterised in that the service centre (SC) communicates with the fixed cellular terminals (TCF) to provide these or a public terminal (TP) connected to it, functions of validation, charging and/or authentication both of terminals and of the means of payment.

7. **SYSTEM FOR PERFORMING OPERATIONS OF SUPERVISION, MAINTENANCE AND CONTROL IN FIXED CELLULAR NETWORKS** according to claim 5, **characterised** in that the service centre (SC) communicates, in like manner, instead of with a public terminal (TP), with an alarm system (AS) through the fixed cellular terminal (TCF) in order to perform functions of transmission of alarms, enabling/inhibiting and authentication and control of these.
